(19) Europäisches Patentamt
European Patent Office
Office européen des brevets

(11) **EP 2 039 793 A1**

(12) **EUROPEAN PATENT APPLICATION**
published in accordance with Art. 153(4) EPC

(43) Date of publication:
**25.03.2009 Bulletin 2009/13**

(51) Int Cl.:
*C22C 38/00* (2006.01)    *B21B 1/26* (2006.01)
*B21B 3/00* (2006.01)    *B21C 37/08* (2006.01)
*B23K 9/18* (2006.01)    *C21D 8/02* (2006.01)
*C22C 38/58* (2006.01)    *B23K 101/06* (2006.01)

(21) Application number: 07743726.7

(22) Date of filing: **14.05.2007**

(86) International application number:
**PCT/JP2007/060291**

(87) International publication number:
**WO 2007/136019 (29.11.2007 Gazette 2007/48)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **24.05.2006 JP 2006144147**

(71) Applicant: **Nippon Steel Corporation**
**Tokyo 100-8071 (JP)**

(72) Inventors:
• **ASAHI, Hitoshi**
**Tokyo 100-8071 (JP)**
• **HARA, Takuya**
**Tokyo 100-8071 (JP)**
• **DOI, Naoki**
**Tokyo 100-8071 (JP)**
• **TERADA, Yoshio**
**Tokyo 100-8071 (JP)**

(74) Representative: **Vossius & Partner**
**Siebertstraße 4**
**81675 München (DE)**

(54) **HIGH-STRENGTH STEEL PIPE WITH EXCELLENT UNSUSCEPTIBILITY TO STRAIN AGING FOR LINE PIPING, HIGH-STRENGTH STEEL PLATE FOR LINE PIPING, AND PROCESSES FOR PRODUCING THESE**

(57) The present invention provides steel plate for high strength line pipe suppressing the rise in yield strength in the longitudinal direction of expanded steel pipe due to the heating at the time of coating to prevent corrosion and superior in strain aging resistance and steel pipe for the material for the same, that is, high strength steel pipe for line pipe superior in strain aging resistance **characterized in that** a base material having a composition of chemical elements containing, by mass%, Mo: over 0% to less than 0.15% and Mn: 1.7 to 2.5%, satisfying Mo/Mn: over 0 to 0.08, containing C, Si, P, S, Al, Ti, N, and B, furthermore containing one or more of Ni, Cu, and Cr, having a balance of iron and unavoidable impurities, having a P value of 2.5 to 4.0 in range, and having a metallurgical structure comprised of bainite and martensite:

$$P\ value = 2.7C+0.4Si+Mn+0.8Cr+0.45(Ni+Cu)+2Mo.$$

Furthermore, it may contain one or more of Nb, V, Ca, REM, and Mg.

EP 2 039 793 A1

# Fig.1

**Description**

TECHNICAL FIELD

The present invention relates to steel pipe for high strength line pipe suitable for pipelines for transporting crude oil, natural gas, etc. and material for the same, that is, steel pipe for high strength line pipe, and methods of production of the same.

BACKGROUND ART

As steel pipe for line pipe used for the trunk lines of pipelines important as methods of long distance transport of crude oil, natural gas, etc., high strength steel pipe of X80 or less of the standards of the American Petroleum Institute (API) is being commercialized. Up until now, high strength, high toughness steel pipe for line pipe has been proposed (for example, Japanese Patent Publication (A) No. 62-4826), but (1) for improvement of the transport efficiency by increasing the pressure or (2) for improvement of the on-site installation efficiency by reducing the outer diameter and weight of the line pipe, further higher strength line pipe is being demanded.

For example, if using the X120 class line pipe having a tensile strength of 900 MPa or more, the internal pressure, that is, the pressure of the crude oil or natural gas, can be made about 2 times that of the X65 class line pipe, so it becomes possible to transport about double the amount of the crude oil or natural gas. Further, if increasing the line pipe in strength by improving the strength against internal pressure, compared with the case of making the walls thicker, it becomes possible to cut the material costs, transport costs, and on-site welding costs and it becomes possible to greatly reduce the pipeline laying costs.

Further, pipelines are frequently also laid in artic areas, so must be superior in low temperature toughness. Furthermore, at the time of installation, the ends of the line pipes are connected with each other, so superior on-site weldability is also required. To satisfy this demand, steel pipe for high strength line pipe having a base of a microstructure mainly comprised of a mixed structure of bainite and martensite suitable for X120 class line pipe higher in strength than the steel pipe for line pipe proposed in Patent Document has been proposed (for example, Japanese Patent Publication (A) No. 10-298707, Japanese Patent Publication (A) No. 2001-303191, and Japanese Patent Publication (A) No. 2004-52104).

Furthermore, to raise the allowable strain of a pipeline in the longitudinal direction, steel pipe for line pipe reduced in the yield strength in the longitudinal direction is being developed, but in recent years strain aging due to the corrosion-prevention coating for preventing corrosion of the outer surface of steel pipe has been becoming an issue. This is due to the use of fusion bond epoxy and other hot dipping types superior in corrosion-preventing coating. When treating steel pipe by a hot dip type corrosion-prevention coating, the steel pipe is heated to 200 to 250°C. In particular, in steel pipe obtained by shaping steel plate into a pipe by cold working, welding the abutted parts, then expanding the pipe, for example, UOE steel pipe, strain is introduced, so the problem of so-called strain aging causing a rise in the yield strength in the longitudinal direction arises. Strain aging is the phenomenon of the strength rising due to adhesion of C atoms to dislocations or formation of fine precipitates when steel into which strain has been introduced is heated. However, the steel pipes proposed in the above patents do not consider strain aging at all.

In view of this problem, steel pipes superior in strain aging resistance are being proposed (for example, Japanese Patent Publication (A) No. 2005-60838, Japanese Patent Publication (A) No. 2005-60839, and Japanese Patent Publication (A) No. 2005-60840), but these are heated after hot rolling. For this reason, either a heating device has to be provided adjoining the hot rolling mill or heat treatment has to be performed in another step. The production costs increase and the productivity is impaired.

DISCLOSURE OF THE INVENTION

The present invention provides steel pipe for high strength line pipe corresponding to the API standard X120 given a tensile strength in the circumferential direction of 900 MPa or more for maintaining the internal pressure resistance strength which steel pipe for high strength line pipe is obtained by treating steep pipe obtained by shaping steel plate into a pipe, arc welding the seam parts, then expanding the pipe so as to suppress the rise of the yield strength in the longitudinal direction due to the heating at the time of coating to prevent corrosion without heat treatment and is therefore superior in strain aging resistance and furthermore steel plate for high strength line pipe used as a material for steel pipe for high strength line pipe and methods of production of the same.

The inventors took note of the contents of Mo and Mn and engaged in intensive research to obtain steel pipe for high strength line pipe having a tensile strength in the circumferential direction of 900 MPa or more, superior in low temperature toughness and weldability, and further having a yield strength in the longitudinal direction not greatly rising due to heating at 200 to 250°C. As a result, they obtained the discovery that reduction of the amount of Mo and furthermore limitation of Mo/Mn improves the strain aging resistance. The present invention was made based on this discovery and has as its gist the following:

(1) High strength steel pipe for line pipe superior in strain aging resistance characterized in that the base material has a composition of chemical elements containing, by mass%,

C: over 0.03% to 0.07,
Si: 0.6% or less,
Mn: 1.7 to 2.5%,
P: 0.015% or less,
S: 0.003% or less,
Al: 0.1% or less,
Mo: over 0% to less than 0.15%,
Ti: 0.005 to 0.03%,
N: 0.001 to 0.006%, and
B: 0.0006 to 0.0025%,

furthermore containing one or more of

Ni: 1.5% or less,
Cu: 1.0% or less, and
Cr: 1.0% or less,

having a balance of iron and unavoidable impurities, satisfying

Mo/Mn: over 0 to 0.08

having a P value expressed by the following (formula 1) of 2.5 to 4.0 in range, having a metallurgical structure comprised of bainite and martensite, and having a circumferential direction tensile strength $TS_{Cpp}$ [MPa] of 900 to 1100 MPa:

$$P\text{-value} = 2.7C + 0.4Si + Mn + 0.8Cr + 0.45(Ni + Cu) + 2Mo\ldots \quad \text{(formula 1)}$$

where, C, Si, Mn, Cr, Ni, Cu, and Mo are the contents of the elements [mass%].

(2) High strength steel pipe for line pipe superior in strain aging resistance as set forth in (1), characterized in that the base material has a composition of chemical elements containing, by mass%, one or more of:

Nb: 0.1% or less,
V: 0.1% or less,
Ca: 0.01% or less,
REM: 0.02% or less, and
Mg: 0.006% or less.

(3) High strength steel pipe for line pipe superior in strain aging resistance as set forth in (1), characterized in that the base material has contents of Ti and N satisfying:

Ti-3.4N>0.

(4) Steel plate for a material for high strength steel pipe for line pipe superior in strain aging resistance, containing, by mass%,

C: over 0.03% to 0.07%,
Si: 0.6% or less,
Mn: 1.7 to 2.5%,
P: 0.015% or less,

S: 0.003% or less,
Al: 0.1% or less,
Mo: over 0% to less than 0.15%,
Ti: 0.005 to 0.03%,
N: 0.001 to 0.006%, and
B: 0.0006 to 0.0025%,

furthermore containing one or more of:

Ni: 1.5% or less,
Cu: 1.0% or less, and
Cr: 1.0% or less

having a balance of iron and unavoidable impurities,

Mo/Mn: over 0 to 0.08

having a P value expressed by the following (formula 1) of 2.5 to 4.0 in range, having a metallurgical structure comprised of bainite and martensite, and having a circumferential direction tensile strength $TS_{Cpp}$ [MPa] of 880 to 1080 MPa:

$$P\text{-value} = 2.7C + 0.4Si + Mn + 0.8Cr + 0.45(Ni + Cu) + 2Mo...$$

(formula 1)

where, C, Si, Mn, Cr, Ni, Cu, and Mo are the contents of the elements [mass%].

(5) Steel plate for a material for high strength steel pipe for line pipe superior in strain aging resistance as set forth in (4), said high strength steel plate for line pipe superior in strain aging resistance as set forth in (6) characterized by containing, by mass%, one or more of:

Nb: 0.1% or less,
V: 0.1% or less,
Ca: 0.01% or less,
REM: 0.02% or less, and
Mg: 0.006% or less.

(6) Steel plate for a material for high strength steel pipe for line pipe superior in strain aging resistance as set forth in (4), said high strength steel plate for line pipe superior in strain aging resistance characterized in that contents of Ti and N satisfy

Ti-3.4N>0.

(7) A method of production of high strength steel plate for line pipe superior in strain aging resistance as set forth in any one of (4) to (6), said method of production of high strength steel plate for line pipe superior in strain aging resistance characterized by heating a slab obtained by melting and casting steel comprised of chemical elements as set forth in any one of claims 6 to 9 to 1000 to 1250°C, then rough rolling in a recrystallization temperature region of over 900°C, then rolling in the non-recrystallization region at 700 to 900°C with a cumulative reduction amount of 75% or more, then acceleratedly cooling by a cooling rate at a center part of plate thickness of 1 to 30°C/s until a temperature of 500°C or less.

(8) A method of production of high strength steel plate for line pipe superior in strain aging resistance, characterized by shaping steel plate for high strength line pipe produced by the method as set forth in (7) into a pipe so that a rolling direction of the steel plate and a longitudinal direction of the steel pipe match, welding the seam parts, then expanding the pipe.

(9) A method of production of high strength steel plate for line pipe superior in strain aging resistance as set forth in (8), characterized by shaping the pipe by a UO process and welding the seam parts from inner and outer surfaces by submerged arc welding.

(10) A method of production of high strength steel plate for line pipe superior in strain aging resistance as set forth in (8) or (9), characterized in that a pipe expansion rate is 0.7 to 2%.

BRIEF DESCRIPTION OF THE DRAWINGS

FIG. 1 is a view of the relationship between the change of the yield strength in the longitudinal direction of the steel pipe due to aging and the amount of addition of Mo.

FIG. 2 is a view showing the relationship between the change of the yield strength in the longitudinal direction of the steel pipe due to aging and the Mo/Mn.

FIG. 3 is a schematic view of the metallurgical structure of the present invention steel wherein (a) is a schematic view of the metallurgical structure of the lower bainite and (b) is a schematic view of the metallurgical structure of pseudo upper bainite.

FIG. 4 is a schematic view of granular bainite.

BEST MODE FOR CARRYING OUT THE INVENTION

Steel pipe for line pipe has to be mass produced in a short time period, so the material for it, that is, steel plate for line pipe, is being required to be produced as rolled without quenching, tempering, or other heat treatment. Further, from the viewpoint of the on-site weldability, it is necessary to reduce the amount of C. To satisfy the high strength and high toughness under such conditions, a bainite or bainite and martensite mixed structure must be utilized. Further, to stably obtain such a structure, it is effective to hot roll steel to which B is added by controlled rolling and to acceleratedly cool it. Note that steel plate produced by controlled rolling and accelerated cooling has a strength in the plate width direction higher than the strength in the rolling direction. The strength does not change much at all even if heating the steel plate to 200 to 250°C.

Steel pipe produced by shaping this steel plate into a pipe, arc welding the seam parts, and expanding the pipe changes in strength, for example, steel pipe produced by the UOE process changes in strength due to plastic deformation. In particular, the yield strength in the longitudinal direction of the steel pipe $YS_{Lpp}$ [MPa] changes complicatedly in accordance with the structure and properties of the steel plate due to the superposition of the work hardening due to pipe expansion and the Bauschinger effect. For this reason, the yield strength of the longitudinal direction of the steel pipe is difficult to estimate from the yield strength of the rolling direction of the steel plate. If not trying to measure the properties of the steel pipe after expansion, the accurate values cannot be determined. Furthermore, if heating the steel pipe to 200 to 250°C or so, the plastic deformation at the time of pipe expansion will cause a large amount of dislocations to be introduced, so changes in strength not occurring in steel plate occur and the strain aging causes the yield strength to rise.

The inventors changed the amount of Mn and the amount of Mo of steel pipe for high strength line pipe having a low C content, containing B, having a P value expressed by the following (formula 1)

$$P \text{ value} = 2.7C + 0.4Si + Mn + 0.8Cr + 0.45(Ni+Cu) + 2Mo... \text{ (formula 1)}$$

of 2.5 to 4.0 using the contents of the elements of C, Si, Mn, Cr, Ni, Cu, and Mo [mass%], and having a metallurgical structure comprised of bainite and martensite and studied the strain aging resistance. They aged the steel pipe after expansion by heating it to 240°C and holding it there for 10 minutes, subtracted the yield strength in the longitudinal direction of the steel pipe before aging from the yield strength in the longitudinal direction of the steel pipe after aging, and evaluated the difference as the rise in the yield strength in the longitudinal direction of the steel pipe $\Delta YS_{Lpp}$ [MPa].

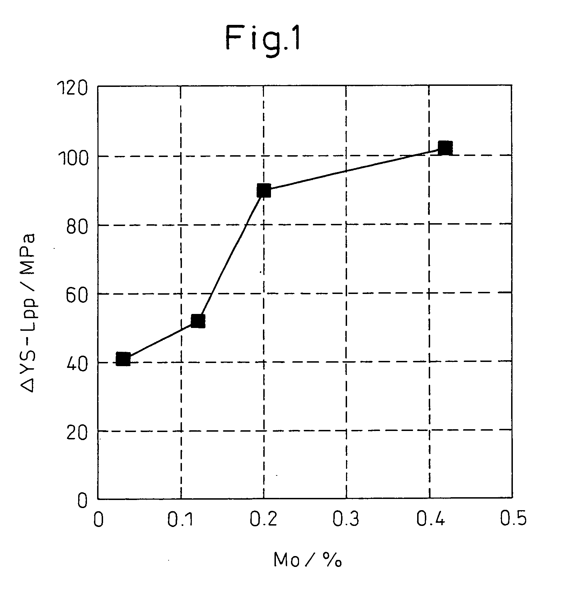

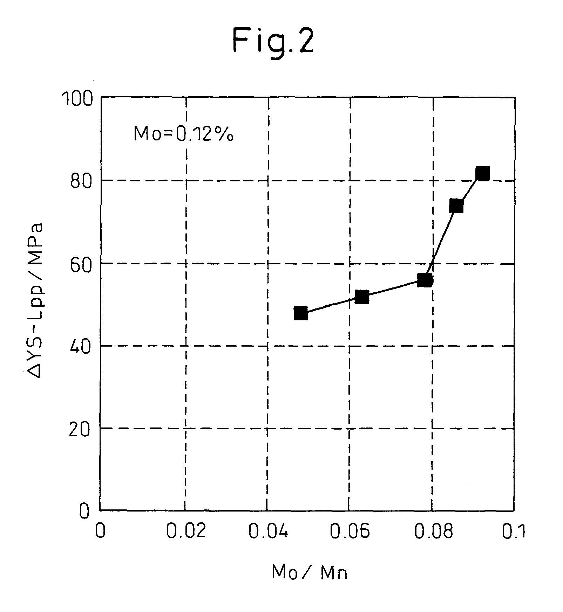

The change in the rise in the yield strength in the longitudinal direction of the steel pipe $\Delta YS_{Lpp}$ [MPa] with respect to the content of Mo is shown in FIG. 1, while the change with respect to Mo/Mn is shown in FIG. 2. From FIG. 1, if reducing the content of Mo to less than 0.15%, the rise in the yield strength in the longitudinal direction of the steel pipe $\Delta YS_{Lpp}$ [MPa] becomes smaller. From FIG. 2, it is learned that if making the Mo/Mn 0.08 or less, the rise in the yield strength in the longitudinal direction of the steel pipe $\Delta YS_{Lpp}$ [MPa] become smaller and the strain aging resistance becomes better. The rise of the yield strength in the longitudinal direction of the steel pipe when heating the steel to 200 to 250°C is estimated to be due to the fine precipitation of MoC. That is, the Mo atoms in the steel will not move due to diffusion, but it is predicted that the C atoms will diffuse in the steel and will bond with the Mo present on or near the introduced dislocations. For this reason, if reducing the content of Mo, it is believed that if the precipitation of MoC is suppressed and the strain aging resistance is improved. Further, the reason for improving the strain aging resistance by the increase of the Mn is believed to be that the reduction of the amount of solid solution C results in a reduction in the fine precipitates of MoC.

From the above consideration, it was learned that suppression of the Mo content is effective for improvement of the strain aging resistance. On the other hand, Mo suppresses the precipitation of B carbonitrides in the austenite temperature region during hot rolling and has the effect of stabilizing the hardenability of steel containing B, so Mo is preferably added in the allowable range. Further, if reducing the amount of C, precipitation of B carbonitrides is suppressed in the austenite temperature region. Note that the austenite temperature region means the temperature where the structure of the steel is an austenite single phase, that is, the range over the temperature where ferrite transformation starts at the time of cooling. Therefore, by reducing the amount of C using the amount giving the necessary strength as the lower limit, adding B, reducing the amount of addition of Mo and the Mo/Mn ratio, and making the P value a predetermined range by adding alloy elements giving hardenability, the inventors succeeded in obtaining the steel pipe for high strength line pipe and the steel plate forming the material for the same of the present invention.

Next, the reasons for limitation of the ingredient elements of the steel plate for super high strength line pipe and the superhigh strength line pipe of the present invention will be explained. Note that in the explanation of the composition of chemical elements, % means the mass%.

Mo is the most important element in the present invention. Mo forms fine MoC by strain aging and raises the yield strength in the longitudinal direction after coating the steel pipe for line pipe to prevent corrosion. In particular, if adding Mo to 0.15% or more, the heating at the time of coating the outer surface of steel pipe to prevent corrosion raises the yield strength in the longitudinal direction of the steel pipe, so the upper limit has to be made less than 0.15%. On the other hand, to improve the hardenability of steel and obtain the targeted mainly bainite structure, over 0% has to be added. To obtain this effect, 0.03% or more is preferably added.

Mn is an element essential for making the microstructure of the present invention steel a mainly bainite structure and securing a good balance of strength and low temperature toughness. Addition of 1.7% or more is necessary. However, if the amount of addition of Mn is too great, the hardenability of the steel is increased to not only degrade the toughness and on-site weldability of the heat affected zone (also called the "HAZ"), but also aggravates the center segregation of the continuously cast slab and degrades the low temperature toughness of the base, so the upper limit was made 2.5%.

Further, Mn is an element having the effect of reducing the amount of solid solution C and suppressing the strain aging. Due to the synergistic effect with the reduction of Mo, the aging resistance is remarkably improved. For this reason, in the present invention, Mo/Mn is made an important indicator for improvement of the strain aging resistance. The upper limit was made 0.08 or less. The lower limit of Mo/Mn was made over 0 since the lower limit of the amount of Mo is over 0%. Note that the preferable lower limit of the amount of Mo is 0.03%. If the upper limit of the amount of Mn is 2.5%, the preferable lower limit of Mo/Mn is 0.012.

C is extremely effective for improving the strength of the steel. To obtain the strength required for steel pipe for high strength line pipe, addition of over 0.03% is necessary. However, if the amount of C is too great, precipitation of B carbides is accelerated and a remarkable deterioration in the low temperature toughness and on-site weldability of the base material and HAZ is invited, so the upper limit was made 0.07% or less. From the viewpoint of the low temperature toughness and on-site weldability of the base material and HAZ, the preferable upper limit of the amount of C is 0.06%.

Si is an element added as a deoxidizing agent and is effective for improving the strength of the steel, but if excessively added, the HAZ toughness and on-site weldability are remarkably degraded, so the upper limit was made 0.6%. When deoxidizing the steel by adding Al and Ti, Si does not have to be added.

Al is an element added as a deoxidizing agent and is effective for increasing the fineness of the structure. However, if the amount of Al exceeds 0.1%, the Al-based nonmetallic inclusions increase and harm the cleanliness of the steel, so the upper limit was made 0.1%. From the viewpoint of the low temperature toughness, the preferable upper limit of the amount of addition of the Al is 0.06%. If adding Ti and Si to sufficiently deoxidize the steel, there is no need to add Al.

Ti is an element making TiN finely precipitate and suppressing the coarsening of the austenite grains at the time of slab reheating and at the HAZ to make the metallurgical structure finer and improve the low temperature toughness of the base material and HAZ. Further, Ti is also useful as a deoxidizing element. When the amount of Al is a small amount of 0.005% or less, there is the effect of forming oxides and making the structure of the HAZ finer. Further, to fix the solid solution N impairing the effect of improvement of the hardenability of B, it is also effective to improve the hardenability. To obtain these effects, addition of 0.005% or more of Ti is necessary. However, if the amount of Ti is too large, the precipitation hardening by TiC or the coarsening of the TiN causes deterioration of the low temperature toughness, the upper limit was made 0.03%. Further, to increase the effect of suppressing the formation of BN and improving the hardenability by B, the lower limit of the amount of Ti is preferably made over 3.4N [mass%].

B is an element extremely effective for strikingly raising the hardenability of steel in extremely small amounts and making the microstructure of steel mainly bainite. Addition of 0.0006% or more is necessary. In particular, if copresent with Mo, the synergistic effect causes the hardenability to remarkably rise, so this is extremely effective. On the other hand, if excessively added, it not only degrades the low temperature toughness, but also impairs the effect of improvement of the hardenability, so the upper limit was made 0.0025%. Further, to improve the low temperature toughness of the HAZ coarsened in grain size, the upper limit of the amount of addition of B is preferably made 0.0015% or less.

N is an element forming TiN and suppressing the coarsening of the austenite grains at the time of slab reheating and at the HAZ to improve the low temperature toughness of the base material and HAZ. To obtain this effect, N has to be added in an amount of 0.001% or more. On the other hand, if excessively adding N, coarse TiN is formed and becomes a cause of surface flaws on the slab. If the solid solution N increases, the HAZ toughness falls and the effect of improvement of the hardenability by addition of B is impaired, so the upper limit has to be suppressed to 0.006% or less.

P and S are impurity elements. To further improve the base material and HAZ in low temperature toughness, it is necessary to limit the content. By reducing the amount of P, it is possible to reduce the center segregation of the continuously cast slab and possible to prevent intergranular breakage, so the upper limit is made 0.015% or less. Further, by reducing the amount of S, it is possible to reduce the MnS stretched in the hot rolling and improve the ductility and toughness, so the upper limit was made 0.003% or less.

Furthermore, the steel contains one or more of Ni, Cu, and Cr which are related to the P value of the indicator of steel hardenability.

The purpose of adding Ni is to improve the low temperature toughness, strength, and other properties of the present invention steel with its low C content without causing deterioration of the on-site weldability. The addition of Ni, compared with the addition of Mn, Cr, and Mo, less often forms hard structures harmful to the low temperature toughness in particular at the thickness center of the steel pipe, that is, locations corresponding to the center segregation band of the continuously cast steel slab. On the other hand, if the amount of addition of Ni is too great, the economy is impaired and conversely the toughness of the HAZ or on-site weldability is degraded, so the upper limit is preferably made 1.5%. To improve the low temperature toughness and strength, addition of 0.1% or more is preferable. For improvement of the toughness of the HAZ, addition of 0.3% or more is preferable. Further, addition of Ni is also effective for preventing Cu cracks at the time of hot rolling at the time of continuous casting. In this case, it is preferable to add Ni in an amount of at least ½ the amount of Cu.

Cu and Cr are elements increasing the strength of the base material and weld zone, but if excessively added, they sometimes cause deterioration of the toughness of the HAZ and on-site weldability, so the upper limits are preferably made 1.0%. To increase the strength of the base material and weld zone, the Cu and Cr are preferably added in amounts of 0.1% or more.

Furthermore, it is also possible to add one or both of Nb and V.

Nb, by addition together with Mo, not only suppresses the recrystallization of austenite and makes the bainite finer and stabler at the time of controlled rolling, but also contributes to precipitation hardening or the increase of hardenability and strengthens and toughens the steel. Further, if adding Nb together with B, the effect of improvement of the hardenability is synergistically raised. On the other hand, if the amount of addition of Nb is too large, there is sometimes a detrimental effect on the HAZ toughness or on-site weldability, so the upper limit is preferably made 0.1%. Note that from the viewpoint of making the structure finer and making the steel stronger and tougher, it is preferable to add Nb in an amount of 0.003% or more. Further, to suppress softening of the HAZ, it is more preferable to add Nb in an amount of 0.01% or more.

V is somewhat weak compared with Nb, but has substantially the same effect. Addition to the steel of the present invention is effective. On the other hand, to obtain a good HAZ toughness and on-site weldability, the upper limit of the amount of addition of V is preferably made 0.1% or less. Note that from the viewpoint of making the structure finer and making the steel stronger and tougher, the preferable lower limit of the amount of addition of V is 0.005% or more. In particular, due to the composite addition of Nb and V, the superior features of the present invention steel become further remarkable. Further, from the viewpoint of increasing the strength and toughness of the steel, the more preferable range of the amount of addition of V is 0.03 to 0.08%.

Furthermore, it is also possible to add one or more of Ca, REM, and Mg effective for control of the oxides and sulfides of steel.

Ca and REM have the effect of controlling the form of the sulfides, in particular, MnS, and improving the low temperature toughness. However, if adding an amount of Ca over 0.01% or REM over 0.02%, the inclusions including Ca and REM sometimes become coarser and further sometimes become clusters. They not only harm the cleanliness of the steel, but sometimes also have a detrimental effect on the on-site weldability. For this reason, the upper limits of the amount of Ca and the amount of REM are preferably made 0.01% or less and 0.02% or less. From the viewpoint of the on-site weldability, the upper limit of the amount of Ca is more preferably limited to 0.006% or less. Further, from the viewpoint of the low temperature toughness, the lower limits of the amount of Ca and the amount of REM are preferably made 0.0005% or more and 0.001%. If considering the cleanliness and low temperature toughness of steel, the optimum ranges of the amount of Ca and the amount of REM added are respectively 0.001 to 0.003% and 0.002 to 0.005%.

Note that in the steel pipe for high strength line pipe of the present invention, from the viewpoint of control of the form of the sulfides, in particular, MnS, it is particularly effective to reduce the amount of S and the amount of O to 0.001% and 0.002% or less and make the indicator ESSP expressed by the following (formula 2) 0.5 to 10:

$$ESSP=(Ca)[1-124(O)]/1.25S \quad ... \quad (formula\ 2)$$

where Ca and O are the Ca content and O content.

Mg exhibits the effects of forming finely dispersed oxides and suppressing the coarsening of the grain size of HAZ to improve the low temperature toughness. However, if adding Mg over 0.006%, sometimes coarse oxides are formed and the toughness is degraded, so the upper limit is preferably made 0.006% or less. To effectively utilize fine oxides of Mg and in particular to improve the low temperature toughness of the HAZ, it is preferable to add 0.0005% or more of Mg.

In addition to the limitation of the composition of the above individual added elements, it is further necessary to make the indicator of the hardenability, that is, the P value, 2.5 to 4.0 in range. This is so as to achieve the balance of the strength and low temperature toughness targeted by the steel pipe for high strength line pipe and the material for the same, that is, steel plate for high strength line pipe, of the present invention. The lower limit of the P value was made 2.5 to make the tensile strength of the circumferential direction of the steel pipe 900 MPa or more and obtain a superior low temperature toughness. Further, the upper limit of the P value was made 4.0 to maintain a superior HAZ toughness and on-site weldability. The P value is calculated by the following formula (1) from the contents [mass%] of the elements of C, Si, Mn, Cr, Ni, Cu, and Mo. Note that when the contents of the selectively added elements of Cr, Ni, and Cu are respectively less than 0.1%, the P value is calculated assuming them as 0:

$$P\text{-value} =2.7C+0.4Si+Mn+0.8Cr+0.45(Ni+Cu)+2Mo \quad ... \quad (1)$$

Next, the metallurgical structure will be explained.

To make the tensile strength in the circumferential direction of the steel pipe 900 MPa or more, it is necessary to suppress the formation of granular bainite and make the metallurgical structure bainite or a bainite and martensite mixed structure. The steel of the present invention reduces the amount of C and adds B, so no polygonal ferrite is produced. In particular, a homogeneous bainite or bainite and martensite mixed structure is easily obtained. In the present invention, the metallurgical structure from at least the surface layer of the outer surface or inner surface of the steel pipe down to 5 mm has to be bainite or a bainite and martensite mixed structure. The entire surface of the plate thickness direction is preferably a bainite or bainite and martensite mixed structure. For this, it is sufficient to confirm that the metal strength of the center of plate thickness is bainite or a bainite and martensite mixed structure. The material of the steel plate of the steel pipe of the present invention is similar. The observation by the structure by an optical microscope may be performed using the circumferential direction of the steel pipe or the traverse direction of the steel plate as the observation surface, mechanically polishing it, then etching it by Nital. Note that the metallurgical structure of steel pipe is the metallurgical structure of the base material other than the weld zone and HAZ.

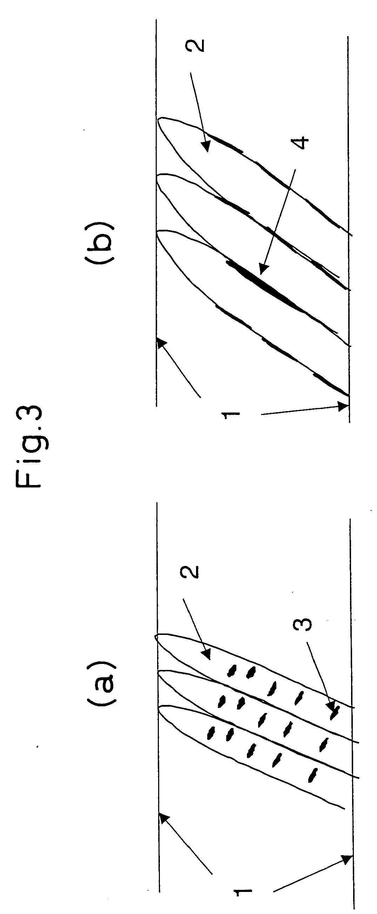

The metallurgical structure comprised of bainite and martensite at the former austenite grain boundaries seen when observing the metallurgical structure of the steel of the present invention by an optical microscope is schematically shown in FIG. 3. FIG. 3(a) shows the metallurgical structure also called "lower bainite" which is comprised of fine cementite 3 precipitated between the fine laths 2 and laths 2. Note that in the observation of structure by an optical microscope, martensite also, similar to FIG. 3(a), is comprised of fine cementite precipitated between the fine laths and laths. FIG. 3(b) shows the metallurgical structure also called "pseudo upper bainite" which has a greater width of laths than the lower bainite of FIG. 3(a) and has no fine cementite in the laths. It has a mixture 4 of martensite and austenite (Martensite-Austenite Constituent or MA) between the laths. In the present invention, "bainite" is the general name for lower bainite of the form schematically shown in FIG. 3(a) and the pseudo upper bainite of the form schematically shown in FIG. 3(b).

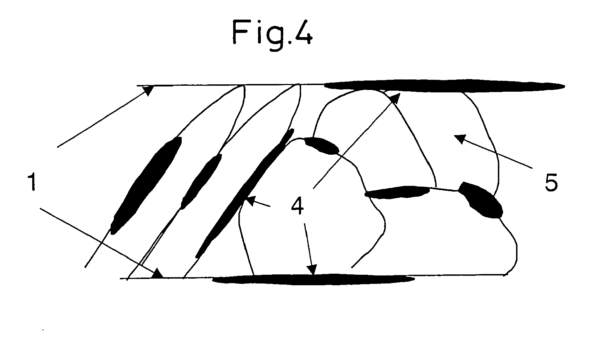

Note that when using an optical microscope to observe the metallurgical structure, both martensite and lower bainite take the form schematically shown in FIG. 3(a), so discrimination is difficult. Therefore, in the present invention, the structure comprised of bainite and martensite means bainite or a mixed structure of bainite and martensite. Note that the martensite and bainite can be differentiated from the ferrite and granular bainite 5 by an optical microscope. The granular bainite resembles acicular ferrite. As schematically shown in FIG. 4, this has coarser MA than pseudo upper bainite. Further, unlike bainite, there is granular ferrite 5.

Further, the fact that the metallurgical structure of the steel plate of the present invention is bainite or a bainite and martensite mixed structure can be confirmed by the tensile strength in the traverse direction of the steel plate $TS_{Tpl}$ [MPa] satisfying the following formula (3). This means that the $TS_{Tpl}$ [MPa], found from the C content by 6200xC+766, is 85% or more of the strength in the case where the metallurgical structure is completely martensite:

$$TS_{Tpl} \geq 0.85(6200 \times C + 766) \quad ... \quad (3)$$

Next, the method of production will be explained.

To produce steel plate having a microstructure comprised of fine bainite and martensite, it is necessary that not only the chemical elements of the steel, but also the production conditions be made suitable ranges. First, the slab obtained by casting is rough rolled in the recrystallization temperature region, then is rolled in the non-recrystallization region to steel plate having recrystallized grains to obtain austenite grains flattened in the plate thickness direction. The rolling in the non-recrystallization region of the present invention means hot rolling performed in the non-recrystallization temperature region and austenite temperature region, that is, the temperature range with an upper limit of less than the recrystallization temperature and a lower limit of at least the temperature where ferrite transformation starts at the time of cooling. After the end of the rolling in the non-recrystallization region, the steel plate is cooled by a suitable cooling rate, that is, a cooling rate where a coarse granular bainite is formed as a lower limit and a cooling rate where bainite and martensite are formed as an upper limit. Note that if the cooling rate is slow, the metallurgical structure becomes pseudo upper bainite. Along with the increase in the cooling rate, the lower bainite increases. If the cooling rate increases, the martensite increases.

At the time of hot rolling, the slab produced by continuous casting or blooming is heated to 1000 to 1250°C. If the heating temperature is less than 1000°C, sufficient solid solution of the added elements and uniformity of grains of the cast structure cannot be achieved. On the other hand, if the heating temperature is over 1250°C, the crystal grains become coarser.

When rough rolling the heated slab, the temperature range is made the recrystallization temperature region from below the heating temperature to over 900°C. The reduction rate in the rough rolling may be suitably determined from the plate thickness of the slab and the plate thickness of the product, but it is preferable to make the temperature lower than the rolling temperature of the rough rolling, increase the reduction rate, and make the crystal grain size as fine as possible before the rolling in the non-recrystallization region.

After the rough rolling, in the lower than 900°C non-recrystallization temperature region and over 700°C austenite temperature region, rolling in the non-recrystallization region is performed with a cumulative reduction rate of 75% or more. The present invention steel has large amounts of Nb and other alloys, so 900°C or less is the non-recrystallization temperature region. Further, the rolling end temperature of the rolling in the non-recrystallization region has to be made the austenite temperature region of 700°C or more. By making the cumulative reduction rate in this temperature range 75% or more, the crystal grains become flat and fine and the strength and toughness are improved. Note that the cumulative reduction rate is the value of the difference between the plate thickness of the steel plate before the rolling in the non-recrystallization region and the plate thickness after the end of rolling divided by the plate thickness of the steel plate before rolling in the non-recrystallization region expressed by a percentage.

After the end of the rolling in the non-recrystallization region, the steel plate is cooled from the over 700°C austenite temperature region by a cooling rate of the center of plate thickness of the steel plate of 1 to 30°C/s to 500°C or less. This is because if the cooling rate is less than 1°C/s, granular bainite is formed at the center of plate thickness of the steel plate and the strength and toughness fall. On the other hand, if the cooling rate of the center of plate thickness exceeds 30°C/s, the martensite increases, the strength rises, and the shapeability at the time of pipemaking and the low temperature toughness are impaired. If the cooling rate of the center of plate thickness is 1 to 30°C/s in range, the surface layer and the center of plate thickness become a metallurgical structure comprised of one or both of bainite and martensite and the low temperature toughness is improved.

This will be explained in further detail. If the cooling rate of the center of plate thickness is 1 to 10°C/s, the present invention steel is low in C, so the formation of carbides is suppressed. The result becomes not upper bainite which is in general said to be poor in low temperature toughness, but pseudo upper bainite wherein the MA formed between the laths is mainly residual austenite. Due to the rise in the cooling rate, the amounts of the lower bainite and martensite increase. If the cooling rate of the center of plate thickness becomes over 10°C/s, the center of plate thickness becomes bainite of a mixed structure of pseudo upper bainite and lower bainite and includes also martensite. Furthermore, when the cooling rate of the center of plate thickness becomes 20°C/s or more, even at the plate thickness center, the amounts of lower bainite and martensite increase and the entire surface of the steel plate sometimes becomes a metallurgical structure comprised of lower bainite and martensite.

The lower limit of the temperature range for controlling the cooling rate, that is, the temperature for stopping the accelerated cooling, was made 500°C or less to obtain a microstructure comprised of fine bainite and martensite. Due to this, it is possible to prevent transformation from austenite to granular bainite and to obtain a metallurgical structure comprised of one or both of bainite and martensite. From the viewpoint of the strength and toughness, the preferable range of the temperature for stopping the accelerated cooling is 300 to 450°C.

The cooling rate of the center of plate thickness when cooling the steel plate should be found by measuring the temperatures of the steel plate surface before and after cooling by a radiation thermometer etc., finding the temperature of the center of plate thickness by calculation of the heat conduction, and dividing the temperature difference before and after cooling by the cooling time. Further, if changing the plate thickness and cooling conditions, for example, the water cooling conditions, in advance and finding the change in time of the temperature of the center of plate thickness of the steel plate by a thermocouple, it is possible to control the cooling rate by the cooling conditions. Note that to calibrate the radiation thermometer and find the parameters for calculation of the heat conduction, it is preferable to measure the temperature at the surface of the steel plate and center of plate thickness by a thermocouple while cooling the plate under various conditions simulating actual operation and measuring the change in temperature along with time.

After the end of the rolling in the non-recrystallization region, it is preferable to immediately start the cooling, but sometimes the temperature falls during transport to the cooling device. Therefore, when ending the rolling in the non-recrystallization region at 700°C, the cooling start temperature sometimes becomes 700°C or less, but there is no problem if making the time from the end of the rolling in the non-recrystallization region to the start of cooling within 60 seconds, preferably within 30 seconds.

The thus obtained steel plate is shaped into a pipe so that the rolling direction and the steel pipe longitudinal direction match and the seam parts are connected to obtain steel pipe. In the present invention, it is necessary to connect the seam parts, then expand the pipe to raise the true circularity of the steel pipe.

The line pipe of the present invention is usually a size of a diameter of 450 to 1500 mm and a wall thickness of 10 to 40 mm or so. To efficiently produce such a size of steel pipe, the steel plate is shaped into a U-shape then an O-shape for pipemaking by the UO process. Further, the welding from the inside and outside surfaces performed after shaping, then tack welding the seam parts is preferably submerged welding from the viewpoint of the productivity.

When expanding steel pipe, it is necessary to make it deform up to the plastic region to improve the circularity. In the case of the steel pipe for high strength line pipe of the present invention, the pipe expansion rate is preferably made 0.7% or more. The pipe expansion rate [%] is defined by the following (formula 4) :

```
Pipe expansion rate = ((circumference after

pipe expansion/circumference before pipe expansion)/

circumference before pipe expansion)×100 ... (4)
```

If the pipe expansion rate exceeds 2%, both the base material and weld zone greatly deteriorate in toughness due to plastic deformation. Therefore, the pipe expansion rate is preferably made 0.7 to 2%.

EXAMPLES

Steel of each of the chemical elements shown in Table 1 was produced in a 300 ton converter, then continuously cast to obtain steel slab. After this, this was reheated to 1100°C, rolled in a recrystallization region over 900°C, then rolled in the non-recrystallization region in a temperature range of 750 to 900°C by a cumulative amount of reduction of 80%. After ending the rolling in the non-recrystallization region at 750°C, the steel was acceleratedly cooled by water cooling from the temperature of 700°C or more under the conditions shown in Table 2 to produce steel plate having a plate thickness of 18 mm. The cooling rate was found by measuring the surface temperature of the steel plate before and after the start of cooling by a radiation thermometer, finding the temperature of the center part of the plate thickness of the steel plate by calculation of the heat conduction, and dividing the difference in temperature by the cooling time.

These steel plates were shaped into pipes by the UO process, were tack welded at the seam parts, then were submerged welded. The submerged welding was performed under welding conditions of three electrodes at 1.5 m/min and input heat of 2.8 kJ/mm by one pass each from the inside and outside surfaces. After this, the pipe was expanded by a pipe expansion rate of 1% to produce steel pipe having an outside diameter of 965 mm.

Samples were taken from the surface of these steel pipe, center part of the plate thickness, and center part between the surface and center of plate thickness using the cross-section in the circumferential direction as the observed surfaces. The metallurgical structures were observed by an optical microscope. Note that the observed surface of the sample for observation of the metallurgical structure was mechanically polished, then etched by Nital. As a result, in each steel pipe, granular bainite was not observed. It was confirmed that the entire surface was a metallurgical structure comprised of bainite and martensite.

Tensile test pieces were obtained from these steel plate and steel pipe and subjected to tensile tests based on API 5L. Full thickness test pieces were taken from the steel plate and steel pipe in the longitudinal direction of the steel plate (L direction) and traverse direction (T direction) and in the longitudinal direction of the steel pipe (L direction). Full thickness arc-shaped strips were taken from the steel pipe in the circumferential direction (C direction) of the steel pipe and flattened by pressing to prepare full thickness test pieces having the circumferential direction as the longitudinal direction. The yield strength was evaluated as the 0.2% offset yield strength. Note that part of the tensile test piece of the L direction of the steel pipe was heated to 220°C and held there at 10 minute for aging treatment. The yield strength of the test piece before aging was subtracted from the yield strength of the test piece after aging and the difference was evaluated as the rise in the yield strength in the longitudinal direction of the steel pipe $\Delta YS_{Lpp}$ [MPa]. Note that a rise in the yield strength in the longitudinal direction of the steel pipe $\Delta YS_{Lpp}$ [MPa] of 100 MPa or less was designated as a good range.

Further, the Charpy impact test was performed based on JIS Z 2242 using a full size 2 mmV notch test piece at -30°C. The Charpy impact test piece was fabricated using the circumferential direction as the longitudinal direction. The properties of the steel plate and steel pipe are shown in Table 2.

The Nos. 1 to 10 steel plates and steel pipes were produced using the steels A to G having the chemical elements in the scope of the present invention and produced by the conditions in the scope of the present invention, have strengths in the target range, and are high in low temperature toughness. On the other hand, No. 11 has an amount of Mo greater than the scope of the present invention, so the rise in the yield strength in the longitudinal direction of the steel pipe $\Delta YS_{Lpp}$ [MPa] due to aging is large. No. 12 has an amount of C smaller than the scope of the present invention, so does not satisfy the strength.

Table 1

| No | Composition of chemical elements (mass%) | | | | | | | | | | | | | | | | Mo/Mn | P-value | Remarks |
|----|------|------|------|-------|--------|-------|-------|--------|--------|------|------|------|------|-------|-------|------------|-------|---------|---------|
| | C | Si | Mn | P | S | Ti | Al | N | B | Mo | Ni | Cu | Cr | Nb | V | Ca, REM, Mg | | | |
| A | 0.043 | 0.11 | 1.96 | 0.008 | 0.0008 | 0.012 | 0.014 | 0.0032 | 0.0009 | 0.12 | 0.49 | 0.29 | 0.51 | 0.028 | | | 0.06 | 3.12 | Inv. ex. |
| B | 0.051 | 0.08 | 1.94 | 0.011 | 0.0009 | 0.014 | 0.017 | 0.0043 | 0.0011 | 0.03 | 0.54 | 0.32 | 0.43 | 0.015 | 0.032 | | 0.02 | 2.90 | |
| C | 0.038 | 0.17 | 2.25 | 0.007 | 0.0014 | 0.015 | 0.025 | 0.0028 | 0.0013 | 0.09 | 0.81 | | | 0.006 | 0.061 | Ca 0.003 | 0.04 | 2.97 | |
| D | 0.035 | 0.25 | 1.74 | 0.013 | 0.0017 | 0.013 | 0.015 | 0.0031 | 0.0014 | 0.09 | 0.62 | 0.4 | 0.82 | 0.012 | | Mg 0.001 | 0.05 | 3.23 | |
| E | 0.056 | 0.22 | 1.92 | 0.009 | 0.0015 | 0.017 | 0.032 | 0.0048 | 0.0008 | 0.12 | | | 0.83 | | 0.046 | | 0.06 | 3.06 | |
| F | 0.044 | 0.13 | 1.83 | 0.012 | 0.0006 | 0.014 | 0.018 | 0.0024 | 0.0009 | 0.05 | 0.38 | 0.51 | 0.3 | 0.034 | | REM 0.008 | 0.03 | 2.74 | |
| G | 0.048 | 0.06 | 1.85 | 0.008 | 0.0004 | 0.016 | 0.019 | 0.0025 | 0.0012 | 0.13 | 0.54 | | 0.61 | 0.017 | | | 0.07 | 2.99 | |
| H | 0.045 | 0.14 | 1.91 | 0.013 | 0.0011 | 0.018 | 0.022 | 0.0034 | 0.0009 | 0.38 | 0.31 | | 0.28 | 0.031 | | | 0.20 | 3.21 | Comp. ex. |
| I | 0.026 | 0.15 | 2.13 | 0.009 | 0.0009 | 0.017 | 0.033 | 0.0041 | 0.0013 | 0.08 | 0.45 | | 0.35 | 0.027 | | | 0.04 | 2.90 | |

EP 2 039 793 A1

Table 2

| No. | Steel no. | Steel plate production conditions | | Steel plate properties | Steel pipe properties | | | | Strain aging resistance | Remarks |
|---|---|---|---|---|---|---|---|---|---|---|
| | | Cooling rate | Water cooling stop temperature | Tensile strength | Tensile strength | Yield strength | Charpy absorption energy | | $\Delta YS_{LPP}$ | |
| | | | | T direction | C direction | L direction | | | L direction | |
| | | °C/s | °C | MPa | MPa | MPa | J | | MPa | |
| 1 | A | 15 | 340 | 962 | 988 | 856 | 283 | | 55 | Inv. ex. |
| 2 | A | 8 | 330 | 944 | 969 | 825 | 272 | | 48 | |
| 3 | B | 10 | 410 | 975 | 997 | 882 | 273 | | 45 | |
| 4 | B | 5 | 300 | 938 | 960 | 817 | 269 | | 39 | |
| 5 | C | 30 | 280 | 981 | 1003 | 868 | 301 | | 46 | |
| 6 | C | 15 | 260 | 970 | 992 | 854 | 295 | | 47 | |
| 7 | D | 20 | 350 | 956 | 976 | 883 | 317 | | 49 | |
| 7 | E | 8 | 330 | 962 | 994 | 854 | 262 | | 44 | |
| 9 | F | 20 | 320 | 933 | 957 | 837 | 294 | | 48 | |
| 10 | G | 8 | 380 | 926 | 959 | 818 | 298 | | 59 | |
| 11 | H | 10 | 360 | 988 | 1012 | 882 | 276 | | 112 | Comp. ex. |
| 12 | I | 30 | 330 | 862 | 888 | 775 | 299 | | 35 | |

**Claims**

1. High strength steel pipe for line pipe superior in strain aging resistance **characterized in that** the base material has a composition of chemical elements containing, by mass%,

   C: over 0.03% to 0.07,
   Si: 0.6% or less,
   Mn: 1.7 to 2.5%,
   P: 0.015% or less,
   S: 0.003% or less,
   Al: 0.1% or less,
   Mo: over 0% to less than 0.15%,
   Ti: 0.005 to 0.03%,
   N: 0.001 to 0.006%, and
   B: 0.0006 to 0.0025%,

   furthermore containing one or more of

   Ni: 1.5% or less,
   Cu: 1.0% or less, and
   Cr: 1.0% or less,

   having a balance of iron and unavoidable impurities, satisfying

   Mo/Mn: over 0 to 0.08

   having a P value expressed by the following (formula 1) of 2.5 to 4.0 in range, having a metallurgical structure comprised of bainite and martensite, and having a circumferential direction tensile strength $TS_{Cpp}$ [MPa] of 900 to 1100 MPa:

$$P\text{-value} = 2.7C + 0.4Si + Mn + 0.8Cr + 0.45(Ni+Cu) + 2Mo\ldots \quad \text{(formula 1)}$$

   where, C, Si, Mn, Cr, Ni, Cu, and Mo are the contents of the elements [mass%].

2. High strength steel pipe for line pipe superior in strain aging resistance as set forth in claim 1, **characterized in that** the base material has a composition of chemical elements containing, by mass%, one or more of:

   Nb: 0.1% or less,
   V: 0.1% or less,
   Ca: 0.01% or less,
   REM: 0.02% or less, and
   Mg: 0.006% or less.

3. High strength steel pipe for line pipe superior in strain aging resistance as set forth in claim 1, **characterized in that** the base material has contents of Ti and N satisfying:

   Ti-3.4N>0.

4. Steel plate for a material for high strength steel pipe for line pipe superior in strain aging resistance, containing, by mass%,

   C: over 0.03% to 0.07%,
   Si: 0.6% or less,
   Mn: 1.7 to 2.5%,
   P: 0.015% or less,

S: 0.003% or less,
Al: 0.1% or less,
Mo: over 0% to less than 0.15%,
Ti: 0.005 to 0.03%,
N: 0.001 to 0.006%, and
B: 0.0006 to 0.0025%,

furthermore containing one or more of:

Ni: 1.5% or less,
Cu: 1.0% or less, and
Cr: 1.0% or less

having a balance of iron and unavoidable impurities,

Mo/Mn: over 0 to 0.08

having a P value expressed by the following (formula 1) of 2.5 to 4.0 in range, having a metallurgical structure comprised of bainite and martensite, and having a circumferential direction tensile strength $TS_{Cpp}$ [MPa] of 880 to 1080 MPa:

$$P\text{-value} = 2.7C + 0.4Si + Mn + 0.8Cr + 0.45(Ni+Cu) + 2Mo... \quad (\text{formula 1})$$

where, C, Si, Mn, Cr, Ni, Cu, and Mo are the contents of the elements [mass%].

5. Steel plate for a material for high strength steel pipe for line pipe superior in strain aging resistance as set forth in claim 4, said high strength steel plate for line pipe superior in strain aging resistance as set forth in claim 4 **characterized by** containing, by mass%, one or more of:

Nb: 0.1% or less,
V: 0.1% or less,
Ca: 0.01% or less,
REM: 0.02% or less, and
Mg: 0.006% or less.

6. Steel plate for a material for high strength steel pipe for line pipe superior in strain aging resistance as set forth in claim 4, said high strength steel plate for line pipe superior in strain aging resistance **characterized in that** contents of Ti and N satisfy

Ti-3.4N>0.

7. A method of production of high strength steel plate for line pipe superior in strain aging resistance as set forth in any one of claims 4 to 6, said method of production of high strength steel plate for line pipe superior in strain aging resistance **characterized by** heating a slab obtained by melting and casting steel comprised of chemical elements as set forth in any one of claims 6 to 9 to 1000 to 1250°C, then rough rolling in a recrystallization temperature region of over 900°C, then rolling in the non-recrystallization region at 700 to 900°C with a cumulative reduction amount of 75% or more, then acceleratedly cooling by a cooling rate at a center part of plate thickness of 1 to 30°C/s until a temperature of 500°C or less.

8. A method of production of high strength steel plate for line pipe superior in strain aging resistance, **characterized by** shaping steel plate for high strength line pipe produced by the method as set forth in claim 7 into a pipe so that a rolling direction of the steel plate and a longitudinal direction of the steel pipe match, welding the seam parts, then expanding the pipe.

9. A method of production of high strength steel plate for line pipe superior in strain aging resistance as set forth in claim 8, **characterized by** shaping the pipe by a UO process and welding the seam parts from inner and outer surfaces by submerged arc welding.

10. A method of production of high strength steel plate for line pipe superior in strain aging resistance as set forth in claim 8 or 9, **characterized in that** a pipe expansion rate is 0.7 to 2%.

# Fig.1

# Fig.2

Fig.3

(a)

(b)

# Fig.4

<table>
<tr><td colspan="2" align="center">**INTERNATIONAL SEARCH REPORT**</td><td>International application No.<br>PCT/JP2007/060291</td></tr>
</table>

A. CLASSIFICATION OF SUBJECT MATTER
*C22C38/00*(2006.01)i, *B21B1/26*(2006.01)i, *B21B3/00*(2006.01)i, *B21C37/08*
(2006.01)i, *B23K9/18*(2006.01)i, *C21D8/02*(2006.01)i, *C22C38/58*(2006.01)i,
*B23K101/06*(2006.01)n
According to International Patent Classification (IPC) or to both national classification and IPC

B. FIELDS SEARCHED

Minimum documentation searched (classification system followed by classification symbols)
C22C38/00-38/60, C21D8/02

Documentation searched other than minimum documentation to the extent that such documents are included in the fields searched
Jitsuyo Shinan Koho         1922-1996    Jitsuyo Shinan Toroku Koho   1996-2007
Kokai Jitsuyo Shinan Koho   1971-2007    Toroku Jitsuyo Shinan Koho   1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2003-94113 A  (Sumitomo Metal Industries, Ltd.),<br>02 April, 2003 (02.04.03),<br>Examples<br>& EP 1295651 A2          & US 2003/62402 A1 | 1-10 |
| A | JP 2002-115032 A  (Nippon Steel Corp.),<br>19 April, 2002 (19.04.02),<br>Examples<br>(Family: none) | 1-10 |
| A | JP 7-331381 A  (Nippon Steel Corp.),<br>19 December, 1995 (19.12.95),<br>Examples<br>(Family: none) | 1-10 |

☐ Further documents are listed in the continuation of Box C.     ☐ See patent family annex.

| | |
|---|---|
| *      Special categories of cited documents:<br>"A"   document defining the general state of the art which is not considered   to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>09 August, 2007 (09.08.07) | Date of mailing of the international search report<br>21 August, 2007 (21.08.07) |
|---|---|
| Name and mailing address of the ISA/<br>    Japanese Patent Office | Authorized officer |
| Facsimile No. | Telephone No. |

Form PCT/ISA/210 (second sheet) (April 2005)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 62004826 A
- JP 10298707 A
- JP 2001303191 A
- JP 2004052104 A
- JP 2005060838 A
- JP 2005060839 A
- JP 2005060840 A